# EUROPÄISCHE PATENTSCHRIFT

(11) **EP 0 729 376 B1**
(45) Veröffentlichungstag und Bekanntmachung des Hinweises auf die Patenterteilung: **09.06.1999**
(21) Anmeldenummer: 95929725.0
(22) Anmeldetag: 31.08.1995
(51) Int. Cl.: B01D 45/14, B04B 5/12

(54) **VORRICHTUNG ZUM ABSCHEIDEN VON ÖL UND/ODER RUSS UND/ODER ANDEREN FREMDSTOFFEN AUS EINEM LUFT-, GAS- UND/ODER DAMPFSTROM**
DEVICE FOR REMOVING OIL, SOOT AND/OR OTHER FOREIGN MATTER FROM AN AIR, GAS AND/OR STEAM FLOW
DISPOSITIF D'EXTRACTION DE L'HUILE, DE LA SUIE ET/OU D'AUTRES MATIERES ETRANGERES CONTENUES DANS UN COURANT D'AIR, DE GAZ ET/OU DE VAPEUR

(30) Priorität: 08.09.1994 DE 4431906; 01.10.1994 DE 4435273; 03.06.1995 DE 19520533
(43) Veröffentlichungstag der Anmeldung: 04.09.1996
(73) Patentinhaber: BAVARIA-TECH, WERNER SCHLATTL, D-94034 Passau (DE)
(72) Erfinder: SCHLATTL, Werner, D-94162 Ruderting (DE); BESSLEIN, Wulf, D-93128 Regenstauf (DE); THEILER, Anton, D-84577 Winzer (DE)
(74) Vertreter: Graf, Helmut, Dipl.-Ing.
(86) Internationale Anmeldenummer: DE9501170
(87) Internationale Veröffentlichungsnummer: WO9607464

(56) Entgegenhaltungen:
- WO-A-86/04257
- DE-A- 1 909 493
- DE-A- 3 702 765
- DE-B- 1 186 412
- FR-A- 458 037
- FR-A- 2 193 639
- GB-A- 983 989
- US-A- 2 994 406

## Beschreibung

Die Erfindung bezieht sich auf eine Vorrichtung gemäß Oberbegriff Patentanspruch 1.

Beispielsweise bei Verbrennungsmotoren und dabei insbesondere bei Otto- und Dieselmotoren ist es notwendig, die das Motoröl, d.h. das zum Schmieren des Motores dienende Öl, enthaltenden oder führenden Motorräume zu entlüften, insbesondere auch die beim Betrieb des Motors verdampften Bestandteile dieses Motoröls (Öldampf) abzuführen.

Aus den verschiedensten Gründen ist eine Entlüftung in die Umgebung nicht möglich oder nicht erwünscht. Bei herkömmlichen Motoren erfolgt diese Entlüftung in den Luftansaugkanal des Verbrennungsmotors, und zwar beispielsweise in den zwischen einem Luftfilter und dem Vergaser liegenden Teil dieses Kanals, so daß die Öldämpfe aus dem Motorraum in den Brennkammern oder Zylindern des Motor mit verbrannt werden. Bei dieser Art der Entlüftung werden erhebliche Nachteile in Kauf genommen, und zwar u.a. eine Verschmutzung des Luftansaugkanals, des Vergasers sowie der im Luftansaugkanal und/oder im Vergaser vorhandenen Funktionselemente durch Ölabscheidungen usw..

Bekannt sind Vorrichtungen zum Abscheiden von Fremdstoffen, insbesondere auch Öl aus einem Luft- oder Gasstrom (DE-A 37 02 765, FR-A- 45 80 37, GB-A-98 39 889 und DE-A-19 09 493). Diesen bekannten Vorrichtungen ist grundsätzlich gemeinsam, daß in einer geschlossenen Kammer eine um ihre Trommelachse rotierend angetriebene Trommel vorgesehen ist, deren Mantelfläche siebartig mit einer Vielzahl von Öffnungen versehen ist. Zum Zuführen des zu reinigenden Gas-, Luft- oder Dampfstromes sowie zum Abführen des gereinigten Luft-, Gas,- oder Dampfstromes sind Anschlüsse vorgesehen, von denen einer in den Innenraum der geschlossenen Kammer und einer in den Trommelinnenraum mündet.

Aufgabe der Erfindung ist es, eine Vorrichtung aufzuzeigen, die bei einfacher Konstruktion ein besonders zuverlässiges Abscheiden von Öl und/oder Ruß und/oder anderen Fremdstoffen ermöglicht.

Zur Lösung dieser Aufgabe ist eine Vorrichtung entsprechend dem Patentanspruch 1 ausgebildet.

Die erfindungsgemäße Vorrichtung eignet sich insbesondere als Ölfilter oder Ölabscheider in Fahrzeugen bzw. bei Verbrennungsmotoren. Hierbei erfolgt durch das Zuführen von Frischluft, deren Temperatur niedriger liegt als die Temperatur des Öldampfes, in den Innenraum der Trommel oder an den Mantel dieser Trommel eine Kühlung der Trommel an ihrem Mantel sowie zugleich auch eine Kühlung des Öldampfes in dem die Trommel umgebenden Teilraum der Kammer, so daß ein Kondensieren des Öldampfes teilweise bereits in diesem Teilraum, zum größeren Teil aber an der Mantelfläche der Trommel erfolgt und das kondensierte Öl als Ölkondensat abgeführt werden kann. Ein Durchtritt von Öldampf durch die Mantelfläche der rotierenden Trommel ist dadurch verhindert, daß der Öldampf dort sofort kondensiert und das kondensierte Öl aufgrund seiner relativ großen Oberflächenspannung den feinmaschigen Mantel der Trommel nicht durchdringen kann, vielmehr von der rotierenden Trommel radial nach außen bewegt oder von dieser abgeschleudert wird.

Die erfindungsgemäße Vorrichtung kann aber auch als Filter zum Ausfiltern von flüssigen und/oder festen Fremdstoffen, wie Ruß, Staub usw., aus einem Link- und/oder Gasstrom verwendet werden.

Weiterbildungen der Erfindung sind Gegenstand der Unteransprüche.

Die Erfindung wird im Folgenden anhand der Figuren an einem Ausführungsbeispiel näher erläutert. Es zeigen:

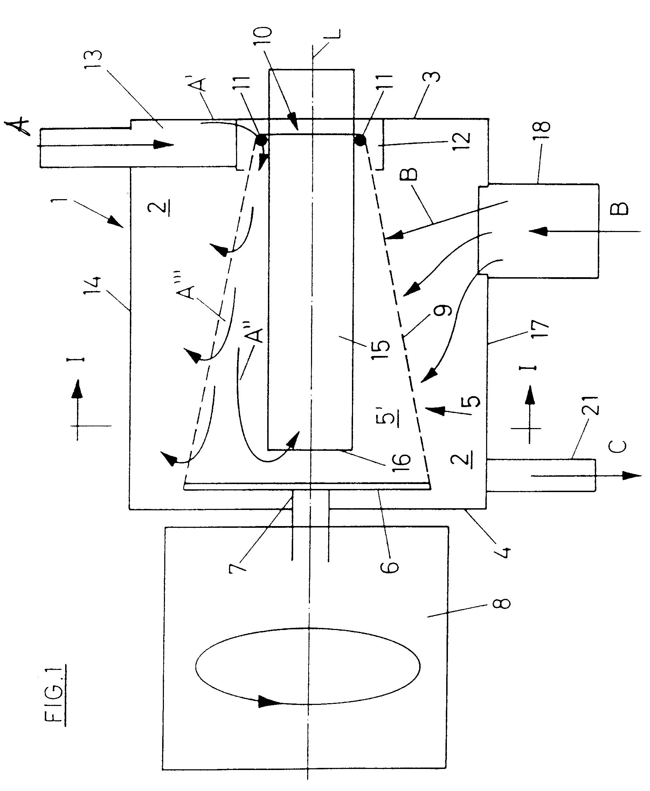

- Fig. 1: in sehr vereinfachter Darstellung und im Längsschnitt eine als Ölabscheider dienende Vorrichtung gemäß der Erfindung;
- Fig. 2: einen Schnitt entsprechend der Linie I - I der Figur 1.

Die in den Figuren dargestellte Vorrichtung, die für eine Verwendung vorzugsweise in Kraftfahrzeugen bestimmt ist, dient zum Abscheiden von verdampftem Öl (Öldampf) oder fein verteilten Ölpartikeln aus einem Luft- oder Gasstrom, der an der Entlüftung eines das Motoröl (Schmiermittel für Motor) enthaltenden oder führenden Motorraums austritt. Der Motorraum ist dabei insbesondere der auch die Nockenwelle(n), die Ventilstößel sowie ggfs. die Kipp- oder Schlepphebel zum Betätigen der Ventile eines Verbrennungsmotors aufnehmende Raum oder ein anderer, das Motoröl enthaltener Raum. Üblicherweise erfolgt die Entlüftung dieses Motorraums über den Luftansaugkanal, so daß an der Entlüftung austretende Öldämpfe oder feine Ölpartikel im Motor verbrannt werden.

Vielfach ist es erwünscht, Öldampf oder Ölpartikel auszuscheiden und als Kondensat dem Motorraum zurückzuführen, um beispielsweise ölablagerungen im Vergaser, in der Luftansaugleitung bzw. an dort vorhandenen Funktionselementen usw. zu vermeiden. Hierfür dient der in den Figuren dargestellte Ölabscheider. Dieser besteht im wesentlichen aus einem Gehäuse 1, welches einen nach außen hin geschlossenen Innenraum 2 bildet. Bei der dargestellten Ausführungsform ist das Gehäuse 1 würfel- oder quaderförmig mit einem entsprechend geformten Innenraum 2 ausgebildet. Es versteht sich, daß das Gehäuse 1 und damit der Innenraum 2 auch eine andere geeignete Formgebung aufweisen könne.

Im Innenraum 2 ist um eine senkrecht zu den beiden Stirnwänden 3 und 4 des Gehäuses 1 verlaufende Achse L eine Trommel 5 drehbar gelagert. Die vollständig vom Gehäuse 1 aufgenommene Trommel 5 ist hierfür an ihrem der Innenfläche der Stirnwand 4 benachbarten und in einer Ebene senkrecht zur Längsachse L angeordneten Boden 6 an dem einen Ende einer Welle 7 befestigt, die abgedichtet aus dem Innenraum 2 durch die Stirnwand 4 herausgeführt ist und durch einen außerhalb des Gehäuses 1 an diesem bzw. an der Strinwand 4 vorgesehenen Elektromotor 8 um die Längsachse L rotierend antreibbar ist. Die Welle 7 ist hierbei beispielsweise die Ausgangswelle des Elektromotors 8.

Die Trommel 5 besteht zusätzlich zu dem beispielsweise von einem Zuschnitt aus korrosionsfreien Metall-Blech hergestellten, geschlossenen Boden 6 auch aus einem rotationssymetrisch zur Längsachse L ausgebildeten und diese Längsachse umschließenden Mantel 9, der von einem feinmaschigen Metallgitter gebildet ist, und zwar wiederum aus einem korrosionsfesten Metall, beispielsweise aus einem korrosionsfesten Stahl. Weiterhin ist der siebartige Mantel 9 kegelstumpfförmig derart ausgebildet, daß der kreisförmige Innendurchmesser der Trommel 5 von dem Boden 6 zum anderen, diesen Boden gegenüberliegenden offenen Ende 10 der Trommel 5 hin abnimmt. An dem offenen Ende 10 ist der Mantel 9 bevorzugt durch einen die Längsachse L konzentrisch umschließenden Ring 11 verstärkt, d.h. der Ring 11 begrenzt eine kreisrunde Öffnung der Trommel 5 am Ende 10.

Mit dem Ende 10 reicht die Trommel 9 in eine an der Innenfläche der Stirnwand 3 gebildete Hilfskammer 12 hinein, die die Trommel 5 im Bereich des Endes 10 auf einer axialen Teillänge umschließt, die nur einen Bruchteil der gesamten axialen Länge der Trommel aufweist. Die Hilfskammer 12 steht mit einem rohrförmigen Anschluß 13 in Verbindung, der zum Innenraum 2 hin abgedichtet, durch die obere, parallel zur Längsachse L sowie senkrecht zu den Stirnwänden 3 und 4 angeordnete Wand 14 herausgeführt ist und zum Zuführen von kalter Frischluft dient (Pfeil A).

Durch die Stirnwand 3 ist ein Rohrstück 15 abgedichtet hindurchgeführt, welches achsgleich mit der Längsachse L angeordnet ist und mit seinem in dem Innenraum 5' der Trommel 5 hineinreichenden offenen Ende dem Boden 6 in einem Abstand benachbart liegt, der wiederum nur einen Bruchteil der gesamten axialen Länge der Trommel 5 ausmacht. Mit dem anderen Ende ist das dort ebenfalls offene Rohrstück 15 abgedichtet durch die Stirnwand 3 nach außen geführt, und zwar zum Anschluß an einen nicht dargestellten Vergaser einer Brennkraftmaschine.

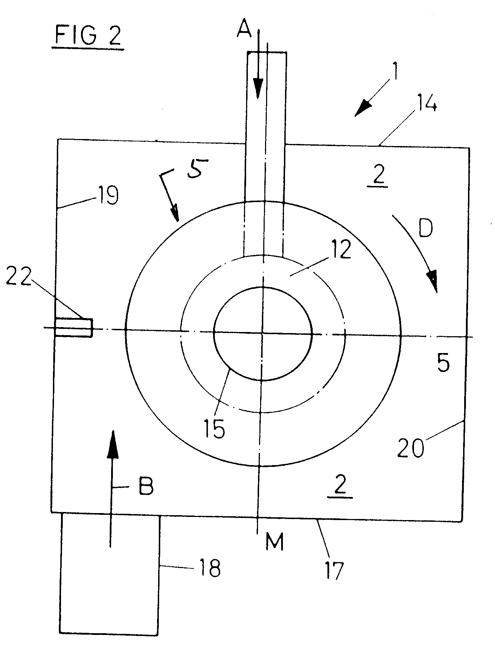

In der parallel zur Wand 14 und im Abstand von dieser angeordneten Bodenwand 17 ist ein Anschluß 18 vorgesehen, über den der Öldampf entsprechend dem Pfeil B dem Ölabscheider bzw. dem die Trommel 5 umgebenden Teilraum des Innenraumes 2 zugeführt wird. Wie die Figuren zeigen, ist der Anschluß 18 bei der dargestellten Ausführungsform so angeordnet, daß er in Richtung der Längsachse L der Stirnwand 3 näherliegt als der Stirnwand 4 und damit auch dem Ende 10 der Trommel 5, die sich nahezu über die gesamte, zwischen den Stirnwänden 3 und 4 gebildete Länge des Innenraumes 2 erstreckt, näherliegt als dem Boden 6, d.h. der Anschluß 18 befindet sich im Bereich eines Teils der Trommel 5, an dem diese einen im Vergleich zum Boden 6 kleineren Durchmesser aufweist. Weiterhin liegt der Anschluß 18 gegenüber einer die Längsachse L einschließenden und senkrecht zur Wand 14 und zur Bodenwand 17 verlaufenden Mittelebene M seitlich versetzt, so daß der Öldampf in etwa tangential zur Trommel 5 in den Raum 2 eintritt, wie dies in der Figur 2 mit dem Pfeil B angedeutet ist. Bei der dargestellten Ausführungsform befindet sich der Anschluß 18 in unmittelbarer Nähe einer der beiden Seitenwände 19 und 20, die jeweils senkrecht zu den Stirnwänden 3 und 4 sowie auch senkrecht zu den Wänden 14 und 17 liegen.

An der Bodenwand 17 ist in unmittelbarer Nähe der Stirnwand 4 noch ein weiterer, in den Innenraum 2 mündender Anschluß 21 vorgesehen, über welchen entsprechend den Pfeil C das abgeschiedene Ölkondensat abgeführt werden kann, und zwar beispielsweise zurück in den Motorraum. Mit dem Pfeil D ist in der Figur 2 schließlich noch die Drehrichtung der Trommel 5 angegeben, d.h. diese Drehrichtung ist an der Öffnung des Anschlusses 18 in den Innenraum 2 gleichsinnig mit der Strömungsrichtung (Pfeil B) des eintretenden Öldampfes.

Der Durchmesser der von dem Ring 11 umschlossenen Öffnung ist etwas größer als der Außendurchmesser des Rohrstückes 15.

Die Arbeitsweise des Ölabscheiders läßt sich, wie folgt, beschreiben:

Der Anschluß 13 ist über eine Abzweigung an dem Luftansaugkanal einer Brennkraftmaschine angeschlossen, so daß über diesen Anschluß 13 entsprechend dem Pfeil A kalte Frischluft zugeführt wird, und zwar der Hilfskammer 12. Der Anschluß 18 ist an die Entlüftung des Motorraumes angeschlossen. Der Anschluß 21 führt ebenfalls zu dem Motorraum. Das aus dem Gehäuse 1 herausgeführte Ende des Rohrstückes 15 ist an dem Vergaser angeschlossen.

Zum Betrieb des Ölabscheiders wird der Elektromotor 8 eingeschaltet, so daß die Trommel 5 um die Längsachse L rotiert, und zwar in Richtung des Pfeiles D.

Die über den Anschluß 13 zugeführte Frischluft tritt im Bereich der Hilfskammer 12 durch den gitterförmigen Mantel 9 sowie insbesondere auch durch den zwischen dem Ring 11 und der Außenfläche des Rohrstückes 15 gebildeten Ringspalt in den Innenraum 5' der Trommel 1 (Pfeil A') ein und wird schließlich über das offene Ende 16 des Rohrstückes 15 zum Vergaser hin abgeführt (Pfeil A''), und zwar durch die Saugwirkung des Motors. Durch die Rotationsbewegung der Trommel 5 und durch die hierdurch erzeugte Zentrifugalkraft gelangt die zugeführte Frischluft zeitweise auch durch den siebartigen Mantel 9 hindurch in den die Trommel 5 umgebenden Teil des Innenraumes 2 (Pfeil A'''), strömt dann aber erneut durch den Mantel 9 hindurch und wird entsprechend dem Pfeil A'' über das Rohrstück 15 abgeführt. Durch die Luftströme A', A'' und A''' wird die Trommel 5 an ihrem gesamten Mantel 9 ständig gekühlt. Durch die Firschluftströmung A''' erfolgt auch eine Abkühlung bzw. Reduzierung der Temperatur des im Innenraum 2 um die Trommel 5 befindlichen Öldampfes oder Öldampf-Luft-Gemisches, so daß es teilweise bereits in dem die Trommel 5 umgebenden Teil des Innenraumes 2, insbesondere aber an der Außenfläche der Trommel 5 zu einem Kondensieren des Öldampfes kommt und das sich an der Innenfläche des Bodens 17 sammelnde Ölkondensat über den Anschluß 21 abgeführt werden kann. Durch die feine, siebartige Ausbildung des Mantels 9 ist verhindert, daß Öldampf bzw. kondensiertes Öl, welches eine relativ große Oberflächenspannung aufweist, durch den Mantel 9 hindurch in den Innenraum 5' gelangen kann. An der Außenfläche des Mantels 9 kondensierendes Öl wird durch die Drehbewegung der Trommel 5 nach außen abgeschleudert und gelangt dann schließlich über den Anschluß 21 in den Motorraum zurück (Pfeil C).

Wie oben ausgeführt wurde und insbesondere auch in der Figur 2 dargestellt ist, bildet das Gehäuse 1 einen Innenraum 2, der entsprechend der Ausgestaltung dieses Gehäuses ebenfalls quader- oder würfelförmig ist, insbesondere aber in den Schnittebenen senkrecht zur Längsachse L ein von der Kreisform abweichenden, nämlich bei der dargestellten Ausführungsform quadratischen Querschnitt besitzt. Durch diese Querschnittsform wird erreicht, daß sich beim Drehen der Trommel 5 um die Längsachse L ein mit der Trommel mitdrehendes Luftvolumen in dem die Trommel 5 umschließenden Teil des Innenraumes 2 nicht ausbilden kann. Der quadratische Querschnitt wirkt somit der Ausbildung eines mit der Trommel mitrotierenden Luftvolumens entgegen und bildet somit sozusagen eine diesem Mitrotieren entgegenwirkende "Schikane".

Eine gleiche Wirkung wird erreicht, wenn das Gehäuse einen rechteckförmigen Querschnitt oder aber einen dreiecksförmigen oder einen einem anderen Vieleck, beispielsweise einem Sechseck entsprechenden Querschnitt aufweist.

Grundsätzlich besteht auch die Möglichkeit, im Inneren des Gehäuses noch weitere Schikanen, beispielsweise in Form von in den Innenraum 2 vorstehenden Rippen, Leisten oder Blechen 22 vorzusehen.

Die Erfindung wurde voranstehend an einem Ausführungsbeispiel beschrieben. Es versteht sich, daß Änderungen sowie Abwandlungen möglich sind, ohne daß dadurch der der Erfindung tragende Gedanke verlassen wird.

So ist es beispielsweise möglich, daß die Trommel 5 an ihrem Mantel 9 mehrlagig ausgebildet ist. Weiterhin ist es auch möglich, die Vorrichtung als Rußfilter auszubilden, wobei dann über den Anschluß 18 rußbehaftete Gase, beispielsweise Abgase eines Diesel-Motors zugeführt und die gereinigten, d.h. von den Rußpartikeln befreiten Abgase über das Rohrstück 15 abgeführt werden. Die Rußpartikel sowie auch vorhandene, unverbrannte Kraftstoffbestandteile werden an der rotierenden Trommel 5 abgeschieden und dort (bei entsprechender Ausbildung des Mantels 9 der Trommel 5 mit einem katalytisch wirkenden Werkstoff) katalytisch und/oder insbesondere nach dem Abschleudern von der rotierenden Trommel 5 in dem diese Trommel umschließenden Teil des Innenraumes 2 durch zugeführte Wärmeenergie verbrannt, wofür der Innenraum 2 dann als Verbrennungskammer eines Nachbrenners ausgebildet ist.

Weiterhin ist es selbstverständlich auch möglich anstelle des Elektromotors 8 einen anderen Antrieb vorzusehen, beispielsweise einen Abgasantrieb.

## Patentansprüche

1. Vorrichtung zum Abscheiden von Öl und/oder Ruß und/oder Fremdstoffen aus einem Luft-, Gas- und/oder Dampfstrom, mit einer geschlossenen Kammer (2), mit einer in dieser Kammer (2) angeordneten Trommel (5), die durch einen Antrieb (8) um ihre Trommelachse (L) rotierend angetrieben ist und einen Trommelinnenraum (5') bildet und zumindest an einem Teil ihres die Trommelachse (L) umschließenden und den Trommelinnenraum (5') begrenzenden Mantels (9) siebartig mit einer Vielzahl von Öffnungen versehen ist, durch die der Trommelinnenraum (5') und ein äußerer Teilraum, der von dem die Trommel (5) umschließenden Teil der Kammer (2) gebildet sind, miteinander in Verbindung stehen, mit einem ersten in den äußeren Teilraum mündenden Anschluß (18) sowie mit einem über eine Öffnung (16) in den Trommelinnenraum (5') mündenden zweiten Anschluß (15) zum Zuführen des Luft-, Gas- und/oder Dampfstromes und Abführen des gereinigten, d.h. von Öl und/oder Ruß und/oder den anderen Fremdstoffen befreiten Luft-, Gas- und/oder Dampfstromes, wobei die Trommel einen senkrecht zur Trommelachse angeordneten Boden (6) und diesen gegenüberliegend ein offenes Ende (10) aufweist, durch welches der zweite Anschluß (15) in den Trommelinnenraum (5') hineinreicht, **dadurch gekennzeichnet**, daß der erste Anschluß (18) zum Zuführen und der zweite Anschluß (15) zum Abführen des Luft-, Gas- und/oder Dampfstromes dienen, und daß die Öffnung (16) des zweiten Anschlusses (15) von dem Boden (6) der Trommel einen Abstand aufweist, der wesentlich kleiner ist als die axiale Länge der Trommel (5).

2. Vorrichtung nach Anspruch 1 dadurch gekennzeichnet, daß wenigstens ein dritter Anschluß (13) zum Zuführen von frischer Luft in den Innenraum der geschlossenen Kammer (2) vorgesehen ist.

3. Vorrichtung nach Anspruch 1 oder 2, dadurch gekennzeichnet, daß eine Hilfskammer (12) vorgesehen ist, in die die Trommel (5) mit einem Ende (10) hineinreicht und der die frische Luft über den wenigstens einen dritten Anschluß (13) zugeführt wird.

4. Vorrichtung nach Anspruch 1 - 3, dadurch gekennzeichnet, daß die Trommel (5) an ihrem Mantel kegelförmig oder kegelstumpfförmig ausgebildet ist.

5. Vorrichtung nach einem der Ansprüche 1 - 4, dadurch gekennzeichnet, daß bei Ausbildung der Vorrichtung als Ölabscheider an einer Bodenfläche der Kammer (2) ein vierter Anschluß (21) zum Abführen von Ölkondensat vorgesehen ist.

6. Vorrichtung nach einem der Ansprüche 1- 5, dadurch gekennzeichnet, daß die Trommel (5) aufnehmende Kammer (2) in Querschnittsebenen senkrecht zur Drehachse der Trommel einen von der Kreisform abweichenden Querschnitt, beispielsweise einen einem Vieleck entsprechenden Querschnitt aufweist.

7. Vorrichtung nach Anspruch 6, dadurch gekennzeichnet, daß die Kammer (2) einen quadratischen, rechteckförmigen oder sechseckförmigen Querschnitt besitzt.

8. Vorrichtung nach einem der Ansprüche 1 - 7, dadurch gekennzeichnet, daß im Inneren der Kammer (2) Schikanen (22) vorgesehen sind, die einer Luftrotationsbewegung entgegenwirken.

9. Vorrichtung nach einem der Ansprüche 1 - 8, dadurch gekennzeichnet, daß für den Antrieb der Trommel ein Abgasantrieb vorgesehen ist.

## Claims

1. Device for separating oil and/or soot and/or foreign matter from a stream of air, gas and/or steam, with a closed chamber (2), with a drum (5) arranged in this chamber (2), this drum being rotated around its drum axis (L) by a drive unit (8) and forming a drum interior (5') and being equipped - at least on part of its casing (9) encompassing the drum axis (L) and delimiting the drum interior (5') - with numerous openings in the manner of a sieve, through which the drum interior (5') and an outer part space which is formed by that part of the chamber (2) enclosing the drum (5) are connected to one another; with a first connection (18) opening into the outer part space, as well as with a second connection (15) opening into the drum interior (5') via an opening (16), for supplying the flow of air, gas and/or steam, and for drawing off the purified air, gas and/or steam flow, i.e. freed of oil and/or soot and/or other foreign matter, with the drum having a base (6) arranged perpendicular to the drum axis, and an open end (10) lying opposite [the base], through which [open end] the second connection (15) extends into the drum interior (5'),
characterised in that
the first connection (18) serves to supply the flow of the air, gas and/or steam and the second connection (15) to draw it off, and that the opening (16) of the second connection (15) is distanced from the base (6) of the drum by a distance which is considerably smaller than the axial length of the drum (5).

2. Device in accordance with claim 1, characterised in that at least one third connection (13) is provided for supplying fresh air into the interior space of the closed chamber (2).

3. Device in accordance with claim 1 or 2, characterised in that an auxiliary chamber (12) is provided, into which one end (10) of the drum (5) extends, and to which fresh air is supplied via the - at least one - third connection (13).

4. Device in accordance with claim 1-3, characterised in that on its casing, the drum (5) is designed in the form of a cone or truncated cone.

5. Device in accordance with one of the claims 1-4, characterised in that where the device is designed as an oil separator, a fourth connection (21) for drawing off oil condensate is provided on a base surface of the chamber (2).

6. Device in accordance with one of the claims 1-5, characterised in that in cross sectional planes pependicular to the rotational axis of the drum, the chamber (2) accommodating the drum (5) has a cross section which differs from the circular shape, for example a cross section corresponding to a polygon.

7. Device in accordance with claim 6, characterised in that the chamber (2) has a square, rectangular or hexagonal cross section.

8. Device in accordance with one of the claims 1-7, characterised in that provided in the interior of the chamber (2) are baffles (22) which counteract any rotational movement of air.

9. Device in accordance with one of the claims 1-8, characterised in that an exhaust gas drive is provided for driving the drum.

## Revendications

1. Dispositif d'extraction d'huile et/ou de suie et/ou de corps étrangers contenus dans un flux d'air, de gaz et/ou de vapeur, comprenant une chambre (2) fermée dans laquelle est disposé un tambour (5) entraîné en rotation autour de son axe L par une commande (8), formant un espace intérieur de tambour (5') et pourvu au moins sur une partie de sa carcasse (9) entourant l'axe de tambour (L) et limitant l'espace inférieur de tambour (5') d'une pluralité d'ouvertures par lesquelles l'espace intérieur de tambour (5') et une zone extérieure, formés par la partie de la chambre (2) entourant le tambour (5), sont reliés l'un à l'autre, avec un premier raccord (18) débouchant dans la zone extérieure, ainsi qu'un deuxième raccord (15) débouchant dans l'espace intérieur de tambour (5') par l'intermédiaire d'une ouverture (16) et destiné à amener le flux d'air, de gaz et/ou de vapeur et à évacuer le flux d'air, de gaz et/ou de vapeur purifié, c'est-à-dire débarrassé de l'huile et/ou de la suie et/ou des autres corps étrangers, le tambour présentant un fond (6) perpendiculaire à l'axe de tambour (L) à l'opposé duquel est prévue une extrémité ouverte (10), par laquelle le deuxième raccord (15) passe dans l'espace intérieur de tambour (5'), caractérisé en ce que le premier raccord (18) sert à amener le flux d'air, de gaz et/ou de vapeur et le deuxième raccord (15) sert à l'évacuer, et en ce que l'ouverture (16) du deuxième raccord (15) est séparée du fond (6) du tambour par une distance qui est sensiblement plus courte que la longueur axiale du tambour (5).

2. Dispositif suivant la revendication 1, caractérisé en ce qu'au moins un troisième raccord (13) est prévu pour amener l'air frais dans l'espace intérieur de la chambre (2) fermée.

3. Dispositif suivant la revendication 1 ou 2, caractérisé en ce qu'il est prévu une chambre auxiliaire (12) dans laquelle le tambour (5) passe par une extrémité (10) et vers laquelle l'air frais est amené par le au moins un troisième raccord (13).

4. Dispositif suivant l'une quelconque des revendications 1 à 3, caractérisé en ce que le tambour (5) présente une carcasse en forme de cône ou de cône tronqué.

5. Dispositif suivant l'une quelconque des revendications 1 à 4, caractérisé en ce que lorsque le dispositif est conçu comme un extracteur d'huile, un quatrième raccord (21) doit être prévu sur une surface de fond de la chambre (2) pour évacuer le condensat d'huile.

6. Dispositif suivant l'une quelconque des revendications 1 à 5, caractérisé en ce que la chambre (2) recevant la tambour (5) présente, dans le plan transversal perpendiculaire à l'axe de rotation du tambour, une section transversale différant de la forme circulaire, par exemple une section transversale en forme de polygone.

7. Dispositif suivant la revendication 6, caractérisé en ce que la chambre (2) a une section transversale carrée, rectangulaire ou hexagonale.

8. Dispositif suivant l'une quelconque des revendications 1 à 7, caractérisé en ce que des chicanes (22) sont prévues dans l'espace intérieur de la chambre (2) et vont à l'encontre d'un mouvement de rotation de l'air.

9. Dispositif suivant l'une quelconque des revendications 1 à 8, caractérisé en ce qu'une commande à gaz d'échappement est prévue pour la commande du tambour.
